# EUROPEAN PATENT APPLICATION

(11) **EP 2 716 722 A1**
(43) Date of publication of application: **09.04.2014**
(21) Application number: 12186932.5
(22) Date of filing: 02.10.2012
(51) Int. Cl.: C09D 5/16

(54) **Synergistically acting polyphosphate- bisphosphonate-copper combinations for antifouling paints**

(71) Applicant: NanotecMARIN GmbH, 55128 Mainz (DE); Universitätsmedizin der Johannes Gutenberg-Universität Mainz, 55131 Mainz (DE)
(72) Inventor: Müller, Werner E. G., 65203 Wiesbaden (DE); Wang, Xiahong, 55129 Mainz (DE); Schröder, Heinz C., 65189 Wiesbaden (DE)
(74) Representative: Krauss, Jan

(57) **Abstract**

The present invention relates to a new principle for eco-friendly antifouling paints based on the synergistic effect caused by copper in combination with polyphosphate(polyP)/bisphosphonate on organisms like bacteria cells. Application of polyP-degrading exopolyphosphatase inhibitors such as bisphosphonates either alone or in combination with polyP prevents detoxification of copper used in antifouling paints by reducing the co-export of copper and phosphate from the bacterial cells, leading to death of the bacteria and preventing fouling, including macrofouling.

## Description

The present invention relates to a new principle for eco-friendly antifouling paints based on the synergistic effect caused by copper in combination with polyphosphate(polyP)/bisphosphonate on organisms like bacteria cells. Application of polyP-degrading exopolyphosphatase inhibitors such as bisphosphonates either alone or in combination with polyP prevents detoxification of copper used in antifouling paints by reducing the co-export of copper and phosphate from the bacterial cells, leading to death of the bacteria and preventing fouling, including macrofouling.

### Background of the invention

After submerging of a solid phase into an aqueous environment (both freshwater and seawater) microorganisms begin to develop a biofilm. The production of this biofilm increases the ability of the bacteria to survive against adverse external factors. The first step in biofilm formation is the adsorption of organic substances from the aqueous environment, a process which results in the assembly of an organic layer onto the inorganic or organic solid phase. The initial phases of the biofouling process are fast; within seconds to minutes the organic layer is formed followed by a settlement of microorganism which takes place within minutes (primary community). After formation of the biofilm layer, secondary organisms, macrofoulers (spores of algae and larvae of animals, e.g. worms or barnacles) begin to attach, a process that requires hours to days (secondary community). Finally, algae, sponges and worms (tertiary community) interact and start to grow on the layers of the primary and secondary communities. In this complex community a selection pressure for the most suitable living conditions of a given taxon causes a change of composition of all three levels of communities. The driving forces are (1) the quorum sensing system coordinating the interactions of the microorganism by the release of stimuli and the response to them within a population and (*2*) the formation of resistance barriers by each taxon. Biofouling coatings provoke not only health hazards as coatings on household and surgical tools but also cause enormous damage to ships and vessels as well as on marine platforms causing huge economic losses.

The mechanism of biofouling, its economic impact and possible antifouling strategies are reviewed in the following publications: Callow ME, Callow JA. Marine biofouling: A sticky problem. Biologist 49:1-5, 2002; Kirschner CM, Brennan AB. Bio-inspired antifouling strategies. Ann Rev Mater Res 42:8.1-8.19, 2012; Schultz M, Bendick J, Holm E, Hertel W. Economic impact of biofouling on a naval surface ship. Biofouling 27:87-98, 2011; and Schultz MP. Effects of coating roughness and biofouling on ship resistance and powering. Biofouling 23:331-341, 2007.

The most effective solutions proposed and applied in combating biofouling on ships had been (i) iron compounds and (ii) tributyltin (TBT), especially as self-polishing copolymer paints (TBT-SPC paints). Until 10 years ago 70% of the vessels of world fleet had been protected with TBT bringing in important economic benefits. Unfortunately TBT-SPC paints adversely affect the environment. As examples; at concentrations of as low as 20 ng/l TBT causes malformation of shells during growth of the oyster *Crassostrea gigas* and at 1 ng/l imposex, specifically impaired development of male characteristics in female genitalia, of *Nucella* sp.

The inventors succeeded first to show that TBT causes apoptosis both in the lowest metazoan, e.g. sponges and in deuterostomians, and later to elucidate that TBT causes this effect in protostomians, as published in: Batel R, Bihari N, Rinkevich B, Dapper J, Schäcke H, Schröder HC, Müller WEG. Modulation of organotin-induced apoptosis by the water pollutant methyl mercury in a human lymphoblastoid tumor cell line and a marine sponge. Mar Ecol Prog Ser 93:245-251, 1993; and Mi 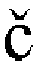 i 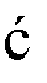 M, Bihari N, Labura 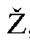 , Müller WEG, Batel R. Induction of apoptosis in the blue mussel Mytilus galloprovincialis by tri-n-butyltin chloride. Aquat Toxicol 55:61-73, 2001.

In view of these and other adverse effects of TBT national regulations in countries all over the world had been released against TBT; after an International Convention (5 October 2001) a far reaching ban of TBT-based antifouling paints had been passed that became effective at 1 January 2008; reviewed in: Champ MA. A review of organotin regulatory strategies pending actions related costs and benefits. Sci Total Environ 258:21-71, 2000; and Champ MA. The Status of the Treaty to Ban TBT in Marine Antifouling Paints and Alternatives. Proceedings of the 24th UJNR (US/Japan) Marine Facilities Panel Meeting in Hawaii, November 7-8, 2001.

Intense research programs have been launched to develop efficient substituting anti-biofouling surfaces, e.g. organic/inorganic membranes, advanced copper compounds and copper nanoparticles or novel organic bioactive compounds; for a review, see: Almeida E, Diamantino TC, de Sousa O. Marine paints: The particular case of antifouling paints. Progr Org Coatings 59:2-20, 2007; Fusetani N. Biofouling and antifouling. Nat Prod Rep 21:94-104, 2004; and Yebra DM, Kiil S, Dam-Johansen K. Antifouling technology. Past, present and future steps towards efficient and environmentally friendly antifouling coatings. Progr Org Coatings 50:75-104, 2004.

Previous strategies of the inventors include, among others, the use of isoquinoline derivatives, as described in Patent US 8,173,673, May 8, 2012**.** Biofilm-inhibition effect and anti-infective activity of N,C-linked aryl isoquinolines and the use thereof. Inventors: Bringmann G, Gulder T, Hentschel U, Meyer F, Moll H, Morschhäuser J, Vanegas PS, Ziebuhr W, Stich A, Brunn R, Müller WEG, Mudogo V.

Copper compounds are potent anti-biofouling agents which are widely used to protect the surfaces of ships against biofilm formation, followed by biofouling (reviewed in: Kiaune L, Singhasemanon N. Pesticidal copper (I) oxide: environmental fate and aquatic toxicity. Rev Environm Contam Toxicol 213:1-26, 2011). However, biofilm-producing bacteria may acquire resistance against copper (Santo CE, Morais PV, Grass G. Isolation and characterization of bacteria resistant to metallic copper surfaces. Appl Environ Microbiol 76:1341-1348, 2010). An economic and functionally indicated solution for an efficient copper-based anti-biofouling protection of the surfaces of solid phases, e.g. the outer surface of the ship trunk body would be to develop bioactive compounds/polymers that can be embedded in the copper-containing paints used for protection. More specific, the second component should result in an increased sensitization of the attaching microorganism onto the copper-coated surfaces. This prerequisite is fulfilled if the second component is co-existing with copper in the paint to be active simultaneously with copper on the solid phase. The inventors succeeded to develop this much-needed solution to improve the anti-biofouling action of copper-coated surfaces.

In the experiments described below the biofilm-producing, Gram-positive bacterium *Streptococcus mutans* was used. The inventors showed that *S. mutans* is sensitively inhibited by copper. They demonstrated that this effect can be synergistically increased by the combined application of polyP and exopolyphosphatase inhibitors such as bisphosphonates, as described in this invention

### Polyphosphates

Inorganic polyphosphates (polyP) are linear bio-polymers of orthophosphate (Pᵢ) residues linked by energy-rich phosphoanhydride bonds. These polymers may range in size of up to several thousands Pᵢ residues. They are present and are synthesized both in pro- and eukaryotic organisms (Kornberg A, Rao NN, Ault-Riché D. Inorganic polyphosphate: a molecule of many functions. Ann Rev Biochem 68:89-125, 1999; Schröder HC, Muller WEG. Inorganic polyphosphates: biochemistry, biology, biotechnology. Springer Press: Berlin, 1999; Kulaev IS, Vagabov V, Kulakovskaya T. The Biochemistry of Inorganic Polyphosphates. John Wiley & Sons Inc: New York, 2004).

PolyP is stable over a wide temperature and pH range; it is readily soluble in water in millimolar concentrations at chain lengths below 100 phosphate units (Kulaev IS, Vagabov V, Kulakovskaya T. The Biochemistry of Inorganic Polyphosphates. John Wiley & Sons Inc: New York, 2004).

The biological function of polyP has mainly been studied in microorganisms (reviewed in: Kulaev IS, Vagabov V, Kulakovskaya T. The Biochemistry of Inorganic Polyphosphates. John Wiley & Sons Inc: New York, 2004) and more recently also in animals (reviewed in: Schröder HC, Lorenz B, Kurz L, Müller WEG: Inorganic polyP in eukaryotes: enzymes, metabolism and function. In: Schröder HC, Müller WEG, eds, Inorganic Polyphosphates - Biochemistry, Biology, Biotechnology. Prog Mol Subcell Biol 23:45-81, 1999; Rao NN, Gómez-Garcia MR, Kornberg A. Inorganic polyphosphate: Essential for growth and survival. Ann Rev Biochem 78:605-647, 2009).

PolyP displays antibacterial (Kulakovskaya TV, Vagabov VM, Kulaev IS. Inorganic polyphosphate in industry, agriculture and medicine: Modem state and outlook. Process Biochemistry 47:1-10, 2012) and also osteoinductive activity (Wang XH, Schröder HC, Wiens M, Ushijima H, Müller WEG. Bio-silica and bio-polyphosphate: applications in biomedicine (bone formation). Curr Opin Biotechnol 2012, DOI 10.1016/j.copbio.2012.01.018). Even more, polyP has anticorrosion properties, e.g. ammonium polyphosphate (Wang G, Yang J. Influences of binder on fire protection and anticorrosion properties of intumescent fire resistive coating for steel structure. Surface Coatings Technol 204:1186-1192, 2010).

In bacteria, polyP is synthesized from ATP by the polyphosphate kinase (Akiyama M, Crooke E, Kornberg A. The polyphosphate kinase gene of Escherichia coli. Isolation and sequence of the ppk gene and membrane location of the protein. J Biol Chem 267:22556-22561, 1992). The degradation of polyP in both prokaryotic and eukaryotic cells is catalyzed by several endo- and exopolyphosphatases (e.g., Lorenz B, Müller WEG, Kulaev IS, Schröder HC. Purification and characterization of an exopolyphosphatase activity from Saccharomyces cerevisiae. J Biol Chem 269:22198-22204, 1994).

The state of knowledge on polyP has been reviewed in: Kornberg A. Inorganic polyphosphate: a molecule of many functions. In: Schröder HC, Müller, WEG (Eds) Inorganic polyphosphates: biochemistry, biology, biotechnology. Progress in Molecular and Subcellular Biology; Vol 23. Springer: Berlin; pp 1-26, 1999; Kulaev IS, Vagabov VM, Kulakovskaya TV. The Biochemistry of Inorganic Polyphosphates. Chichester, England: John Wiley & Sons, Ltd pp 1-277, 2004; Omelon SJ, Grynpas MD. Relationships between polyphosphate chemistry, biochemistry and apatite biomineralization. Chem Rev 108:4694-4715, 2008; Rao NN, Gómez-Garcia MR, Kornberg A. Inorganic polyphosphate: Essential for growth and survival. Annu Rev Biochem 78:605-647, 2009; and Schröder HC, Müller WEG (Eds). Inorganic Polyphosphates. Biochemistry. Biology. Biotechnology. Vol 23, Springer Verlag: Berlin Heidelberg, 1999.

The following patent applications are relevant for the analysis of the chain length of polyP and its interaction with metal oxides:
- German Patent No. DE19703025C2**.** Verfahren zur Messung von Konzentrationen sowie zur kontinuierlichen oder diskontinuierlichen Messung des Umsatzes und der Geschwindigkeit enzymatischer oder nichtenzymatischer Reaktionen von Pyrophosphaten und/oder linearen Polyphosphaten unter Ausschluß von zyklischen Polyphosphaten als auch von Orthophosphaten in einer Probe sowie Anwendung des Verfahrens. Inventors: Lorenz B, Müller WEG, Schröder HC.
- Patent application DE 4309248 A1**.** Modifikation von Metalloxiden mit Polyphosphaten oder ähnlichen Verbindungen und ihre Anwendung. Inventors: Lorenz B, Marmé S, Unger K, Schröder HC, Müller WEG.

### Bisphosphonates

Bisphosphonates are synthetic analogous of pyrophosphate; the oxygen atom of the P-O-P bond of pyrophosphate has been replaced by carbon. The resulting P-C-P group makes the bisphosphonates resistant to enzymatic hydrolysis. For a review, see:
- Reszka AA, Rodan GA. Mechanism of action of bisphosphonates. Curr Osteoporos Rep 1:45-52, 2003.

### Summary of the invention

Biofouling is an enormous problem, both ecologically and economically. Since the ban of the efficient and cost-effective organotin (tributyltin)-containing antifouling paints, partially due to the demonstration of the toxic/pro-apoptotic effects of this compound by the inventors (Batel R, Bihari N, Rinkevich B, Dapper J, Schäcke H, Schröder HC, Müller WEG. Modulation of organotin-induced apoptosis by the water pollutant methyl mercury in a human lymphoblastoid tumor cell line and a marine sponge. Mar Ecol Progr Ser 93:245-251, 1993), there is a strong need for less toxic antifouling compounds and strategies.

This invention is based on a bio-inspired strategy that involves the use of a bio-polymer, inorganic polyphosphates (PolyP) in combination with an exopolyphosphatase inhibitor and copper as an alternative anti-fouling system. To break the developing resistance mechanism against copper, microorganism are using polyP as a scavenger. However, prior to be functionally active polyP has to be hydrolyzed to orthophosphate which in turn can bind to copper and export the toxic compound out of the cells. The inventors have demonstrated that inhibition of the hydrolysis of polyP by the bisphosphonate, dichloromethylene diphosphonic acid (DMDP), strongly increases, in a synergistic manner, the toxic effect of copper towards the biofilm-producing bacteria. The bisphosphonate not only increases the copper-caused inhibition of cell growth but also the inhibition of biofilm production. The new strategy, according to this invention, has a superior anti-biofilm potential and is a novel principle for bio-inspired antifouling compounds.

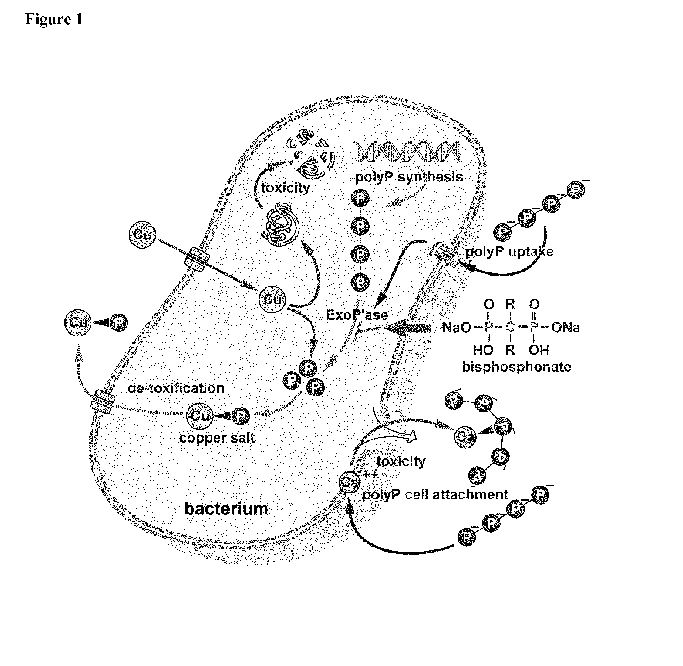

A schematic presentation of the synergistic effect caused by copper in combination with polyP/bisphosphonate on bacteria cells is given in Figure 1. PolyP undergoes enzymatic hydrolysis by intracellular exopolyphosphatases under formation of orthophosphate which binds to influxed copper ions which are then co-transported, as copper-phosphate, out of the bacterial cells. Further it is highlighted that the exopolyphosphatase-mediated hydrolysis of polyP is inhibited by bisphosphonates which in turn prevent the orthophosphate-mediated detoxification of the heavy metal. PolyP either can be formed intracellularly or is imported into the cells via a polyP-β-hydroxybutyrate-Ca²⁺ pump (see: Kulaev IS, Vagabov V, Kulakovskaya T. The Biochemistry of Inorganic Polyphosphates. John Wiley & Sons Inc: New York, 2004). In addition, it is shown that extracellular polyP, after attachment to the bacterial cell membrane, removes Ca²⁺ from the membrane and by that causes death of the bacteria.

This invention represents a significant progress beyond the state-of-the-art, because
(i) it describes a new strategy for prevention of fouling based on the use of a nontoxic bio-polymer (polyP) in combination with an exopolyphosphatase inhibitor and
(ii) it helps to ameliorate to toxic side-effects of copper used in antifouling paints by enabling the use of lower concentrations of copper to achieve the desired effect /antifouling activity.

The advantages of this strategy are twofold:
(i) Only the attaching organisms are co-affected by the two active principles, copper and polyP, while the non-attached organisms remain non-influenced.
(ii) Both compounds act synergistically, so that lower concentrations of the individual bioactive components are required to be included into the paint.

### Detailed description of the invention

This invention concerns a new principle for environmentally friendly antifouling paints based on the synergistic effect caused by copper in combination with polyP/bisphosphonate on bacteria involved in biofilm formation. The inventors discovered that, after exposure of bacteria to copper, polyP undergoes increased degradation by exopolyphosphatase with the result that orthophosphate is formed that binds to copper and in turn sequesters the heavy metal out of the cell. PolyP acts as an intracellular storage for orthophosphate which binds to copper and detoxifies this metal by exporting it. To demonstrate that polyP is able to modulate the toxic effect of copper we used the Gram-positive coccus-shaped bacterium *S*. *mutans* which is rich in polyP. This bacterium forms bulky biofilm margins. The inventors unexpectedly found that exposure of *S*. *mutans* towards copper and polyP results in a synergistic toxic effect. Even more interesting, they could demonstrate, for the first time, that co-incubation of the bacteria with the bisphosphonate dichloromethylenediphosphonic acid (DMDP) causes a stronger synergist effect together with copper than polyP with copper. Bisphosphonates are pyrophosphate analogs, comprising a carbon atom (P-C-P) instead of an oxygen atom (P-O-P) between the two phosphorus atoms. The inventors demonstrated that DMDP inhibits the exopolyphosphatase-catalyzed hydrolysis of polyP with the consequence of a higher copper-caused toxicity. The toxic effect of the defensin-related ASABF (*Ascaris suum* antibacterial factor) peptide, a toxic peptide from the sponge *S*. *domuncula* used for comparison, was merely additively in combination with copper.

In summary, this invention, based on a bio-inspired approach and describing that polyP/bisphosphonate together with copper causes an enhanced and synergistically increased inhibition towards biofilm producing bacteria, by breaking the natural resistance barrier developed in bacteria against the toxic effect of copper, allows the formulation of new antifouling paints that do not show the toxic side-effects of currently used antifouling paints. In addition, polyP/bisphosphonate together with copper prevents macrofouling, e.g., by preventing settlement of barnacles.

The invention will now be described further in the following preferred examples, nevertheless, without being limited thereto. For the purposes of the present invention, all references as cited herein are incorporated by reference in their entities.

In the Figures,
**Figure 1** shows a schematic outline of the synergistic effect caused by copper in combination with polyP/bisphosphonate on bacteria cells. This bioinspired concept implies that copper (Cu), taken up from the solid phase onto which the bacteria are in the process to attach, is imported into the cells and displays its toxicity. In a parallel de-toxification process polyP that is either formed intracellularly or taken up by the polyP-3-hydroxybuturate-Ca²⁺ pump undergoes enzymatic hydrolysis by the exopolyphosphatases (ExoP'ase) under formation of orthophosphate. In turn orthophosphate forms with copper an intracellular salt that is exported from the bacterial cells. In a parallel mode of action polyP, extracellularly attaching to the bacterial membranes removes Ca²⁺ from the cell membrane and by that causes death of the microorganisms.

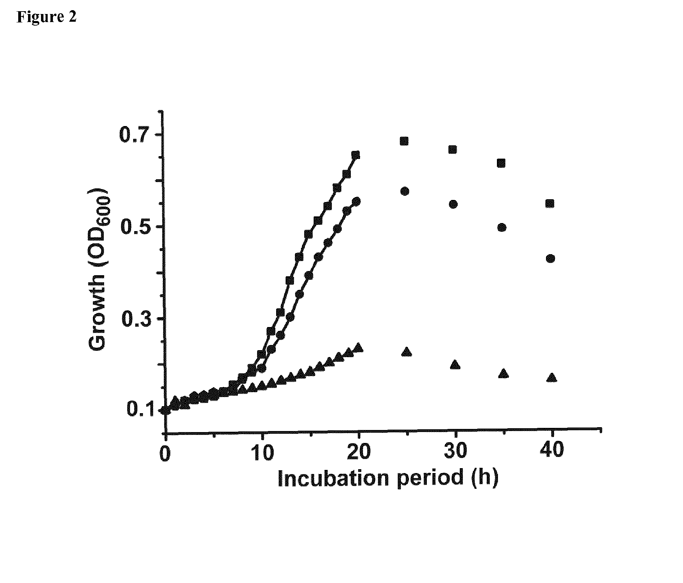

**Figure 2** shows the growth kinetics of *S*. *mutans* in the absence of any compound (■), in the presence of 3 µM CuSO₄ (●) or in cultures with 100 µM CuSO₄ (A). The growth of the bacteria was monitored optically at 600 nm.

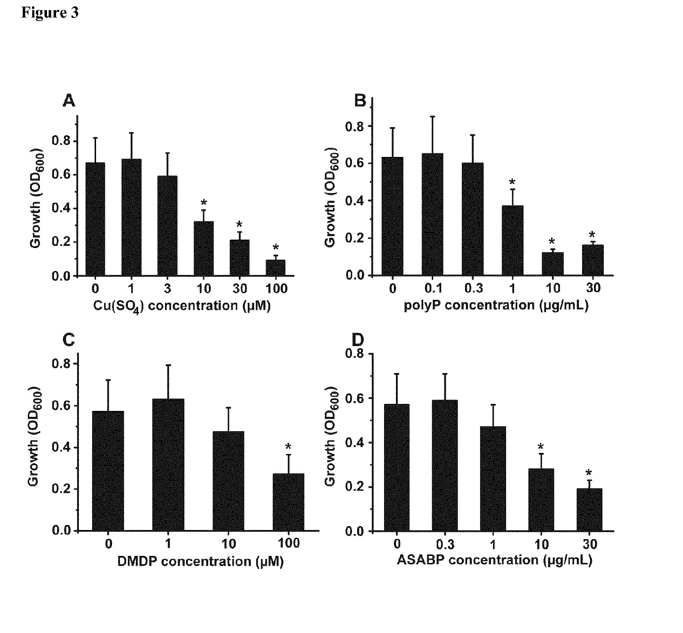

**Figure 3** shows the growth inhibitory effect of the following compounds, added alone to the cultures: (**A**) CuSO₄, (**B**) polyP, (**C**) bisphosphonate DMDP and (**D**) the marine toxin (the defensin-related ASABF) produced by the sponge *S*. *domuncula.* The results are expressed as means (10 experiments each) ± SD of the mean; * *P* < 0.01.

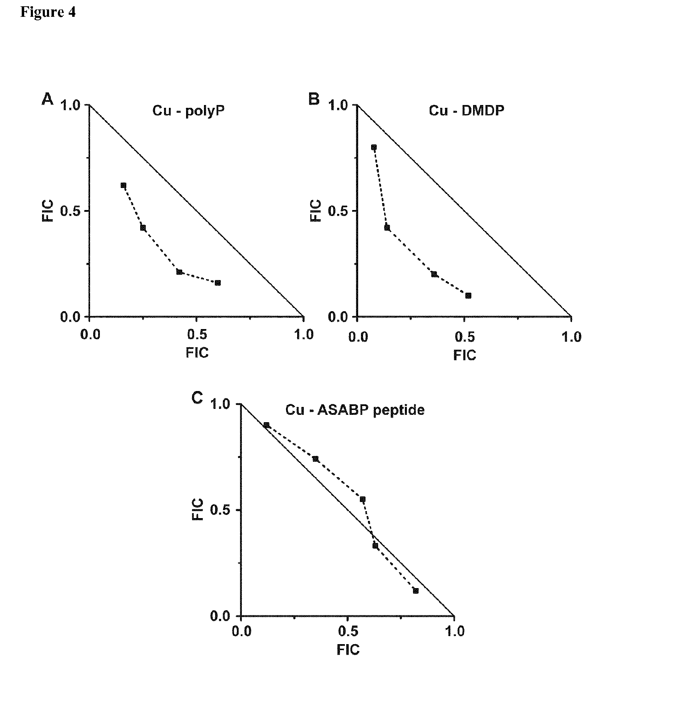

**Figure 4** shows isobolograms showing the synergistic effect (**A**) of polyP and (**B**) of bisphosphonate-DMDP on copper-caused toxicity on *S. mutans.* (**C**) The effect of the marine toxin (defensin-related ASABF) form *S. domuncula* caused only an additive effect on copper toxicity.

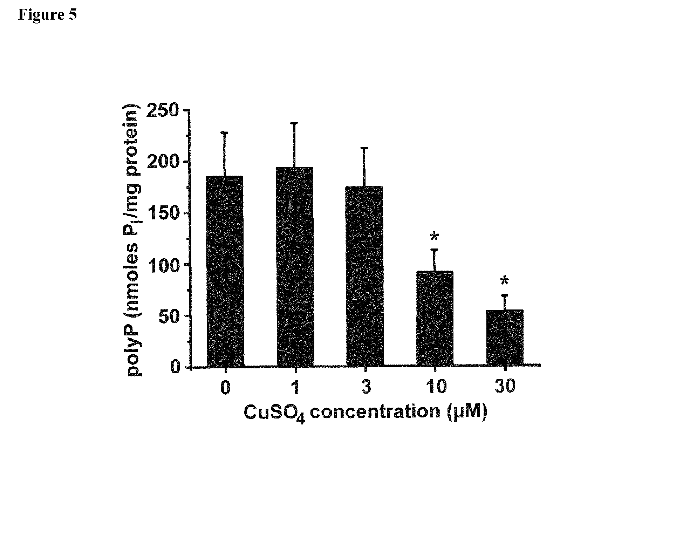

**Figure 5** shows the effect of CuSO₄ in the culture medium of *S. mutans* on the intracellular polyP content. The cells were exposed to different concentrations of CuSO₄ for 25 h. Then the cells were broken and assayed for polyP level using the two-step enzymatic conversion of polyP into ATP. The polyP level is correlated with the bacterial protein content from which polyP was quantitatively determined. Data are means (6 experiments each) ± SD of the mean; * *P*<0.01.

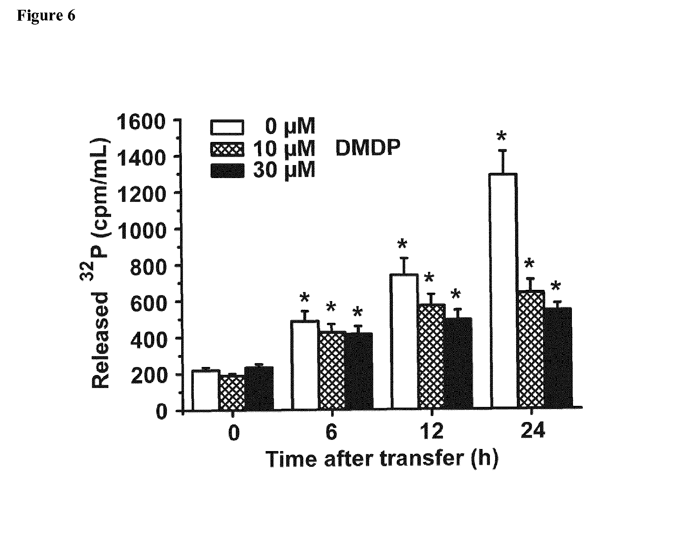

**Figure 6** shows the efflux of Pᵢ from *S. mutans* during incubation with DMDP. At first the cells were labeled with H₃[³²P]O₄ and then transferred to medium without H₃[³²P]O₄. Then the cells were continued to be incubated either in the absence (0 µM) or presence (10 µM or 30 µM) of DMDP for 0 to 24 h, as indicated. At the time indicated the cell free supernatants were collected by centrifugation and counted for radioactivity. Means (6 experiments each) ± SD are given; * *P*<0.01.

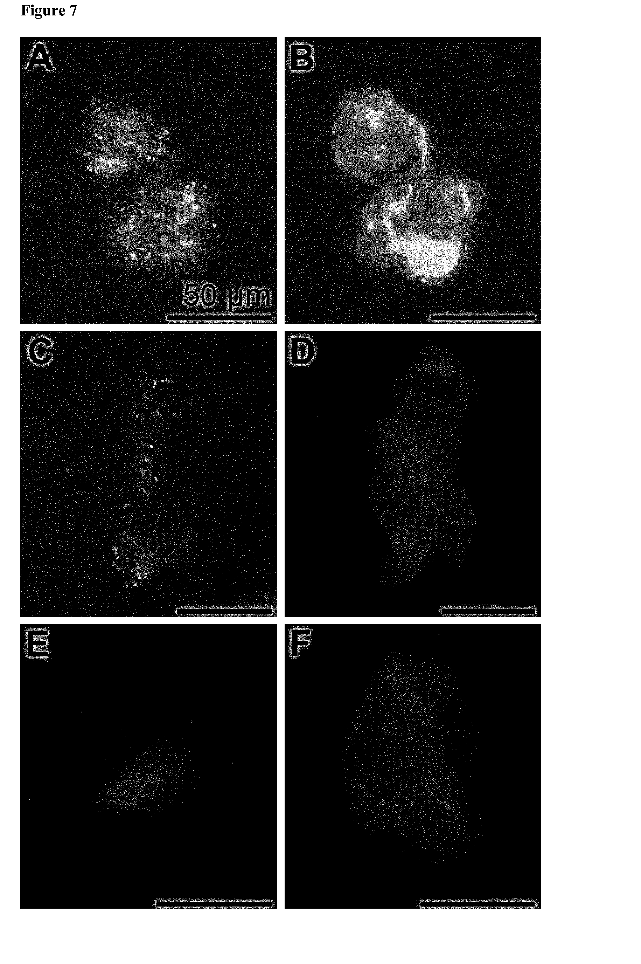

**Figure 7** shows the inhibition of biofilm production by polyP/bisphosphonate DMDP. *S. mutans* had been grown on microscope slides for 5 d (**A** and **B**) in the absence of any inhibitory compound, in the presence of 1 µg/ml of polyP (**C** and **D**), or with 1 µg/ml of polyP together with 1 µg/ml bisphosphonate DMDP (**E** and **F**). After incubation the specimens were reacted with wheat germ agglutinin (WGA)-labeled with Alexa Fluor 555 and 4',6-diamidino-2-phenylindole (DAPI). Then the samples were analyzed for fluorescence of the labeled WGA-lectin (A, C, E), or for DAPI (B, D, F).

### Examples

### Toxic effect of copper on S. mutans

In the experiment shown in Figure 2, the effect of copper on the growth rate of *S*. *mutans* was studied *in vitro,* in liquid culture medium. The growth kinetics revealed that after a lag phase of 10-12 h the logarithmic growth rate starts; the plateau phase is reached after 20-25 h. After 30 h the density of the bacteria drops again. Addition of copper(II) sulphate (CuSO₄) at a concentration of 3 µM the extent of growth starts to be impaired, by 18%. Addition of 100 µM CuSO₄ results in an inhibition of growth by 82% (Figure 2). A detailed dose response relationship is given in Figure 3A. The bacteria were grown for 20 h; after that period the optical density is measured for each culture. A significant drop of the growth, as measured on the basis of the recorded OD₆₀₀ units, is seen at 10 µM CuSO₄ with 0.32±0.07 OD₆₀₀ units compared to the controls with 0.67±0.15 OD₆₀₀ units (Figure 3A). At higher concentrations the copper-caused effect is more pronounced.

### Effect of polyP on the Gram-positive S. mutans

It had been generalized that Gram-positive bacteria, and in turn also *S*. *mutans,* are affected by polyP (see: Kulaev IS, Vagabov V, Kulakovskaya T. The Biochemistry of Inorganic Polyphosphates. John Wiley & Sons Inc: New York, 2004; Moon JH, Park JH, Lee JY. Antibacterial Action of Polyphosphate on Porphyromonas gingivalis. Antimicrob. Agents Chemother 55:806-812, 2011). The antibacterial effect on *S*. *mutans* is significant at a concentration of 1 µg/mL (Figure 3B). At this concentration a 38% growth inhibition is measured. At higher concentrations (e.g. 10 µg/ml) the inhibitory effect is even more pronounced (reduction by 74%).

### Effect of bisphosphonates

The effect of the bisphosphonate DMDP on *S*. *mutans* is comparably lower. Within the concentration range of 1-10 µM DMDP does not display any significant toxic effect, while only at the concentration of 100 µM a significant antibacterial effect is seen; reduction of the cell density after an incubation period of 20 h from 0.57±0.15 to 0.26±0.08 OD₆₀₀ units (Figure 3C).

### The inhibitory activity of the antimicrobial peptide from S. domuncula

As shown in the experiment in Figure 3D, a significant antibacterial activity of the ASABF-type peptide towards *S*. *mutans* is seen at concentrations above 10 µg/mL.

### Evaluation of the combinatorial potential of copper together with the other antimicrobial agents against S. mutans growth

The fractional inhibitory concentration [FIC] is a measure for a potential synergistic/antagonistic/additive effect of two compounds, given in combination. Figure 4A shows that the FIC index for the combination between copper and polyP is 0.62, indicative for a synergistic effect of the two compounds. Even more, if copper is administered together with the bisphosphonate DMDP a very low FIC index of only 0.18 is calculated (Figure 4B). This latter result strongly indicates that the DMDP acts highly inhibitory and highly synergistic with copper on *S*. *mutans.* In contrast, the FIC index copper to ASABF-type peptide was found to be ≈ 0.5 indicating that the peptide acts only additive to the antibacterial function of copper (Figure 4C).

### Effect of copper on polyP content in S. mutans

It is known that polyP is induced in some bacteria after exposure to xenobiotics (see: Kulaev IS, Vagabov V, Kulakovskaya T. The Biochemistry of Inorganic Polyphosphates. John Wiley & Sons Inc: New York, 2004; Rao NN, Gómez-Garcia MR, Kornberg A. Inorganic polyphosphate: Essential for growth and survival. Ann Rev Biochem 78:605-647, 2009). To clarify if also *S*. *mutans* can adapt its polyP level exposure studies with increasing concentrations of CuSO₄ were performed (Figure 5). After incubation of the bacteria for 25 h, in the absence of copper, the level of polyP in the cells was 184±43 nmoles Pᵢ/mg bacterial protein. Addition of 1 or 3 µM CuSO₄ does not significantly change that level. However, in cultures with 10 or 30 µM CuSO₄ the level of intracellular polyP drops to 91±22 or to 53±15 nmoles Pᵢ/mg, respectively.

### Phosphate (Pᵢ) efflux from S. mutans

*S. mutans* cells were labeled H₃[³²P]O₄ during growth in tryptone-vitamin based medium. After transfer to medium, lacking H₃[³²P]O₄, the cells were continued to be cultured. Aliquots were taken, centrifuged and the radioactivity in the supernatant was collected for determination of ³²P, and in turn for [Pᵢ] release. The data summarized in Figure 6 show that cells, not treated with DMDP release significantly more ³²P into the culture medium compared to cells that had been incubated with 10 µM DMDP or 30 µM DMDP, respectively. During a 24 h incubation of the cells, after pulsing with H₃[³²P]O₄, the controls released 1285±131 cpm/mL, compared to 639±71 cpm/mL (10 µM DMDP), or 542±39 cpm/mL (30 µM DMDP), respectively.

### Inhibition of biofilm production

*S. mutans,* if growing as biofilms, bind with the sialic acid termini, existing at their glycoproteins/polysaccharides, to WGA-lectin (Lee W, De La Barca AM, Drake D, Doyle RJ. Lectin-oral streptococci interactions. J Med Microbiol 47:29-37, 1998; Johnsen AR, Hausner M, Schnell A, Wuertz S. Evaluation of fluorescently labeled lectins for noninvasive localization of extracellular polymeric substances in Sphingomonas biofilms. Appl Environ Microbiol 66:3487-3491, 2000). Using this lectin as a tool, under the conditions used, a bright fluorescence was seen at the bacterial plaques formed by *S*. *mutans* in the absence of any additional inhibitory component (Figure 7A). In parallel the bacterial colonies were visualized by 4',6-diamidino-2-phenylindole (DAPI; Sigma) (Figure 7B). However, if the bacteria growing onto the microscope slides were exposed for 5 d to 1 µg/ml of polyP a significant reduction of the staining intensity due to WGA-labeled with Alexa Fluor 555 was seen (Figure 7C); the DAPI stained colonies are shown in parallel (Figure 7D). Very strong was the reduction of the labeled WGA to the bacteria in cultures that had been incubated with 1 µg/ml of polyP together with 1 µg/ml of bisphosphonate DMDP (Figure 7E); parallel image, stained with DAPI (Figure 7F).

In the experiments described above the inventors used CuSO₄ as a copper compound. Copper (Cu) as a transitional metal occurs in nature in several oxidation states. The most prevalent form of copper in the aqueous milieu is Cu²⁺ (Georgopoulos PG, Roy A, Yonone-Lioy MJ, Opiekun RE, Lioy PJ. Copper: environmental dynamics and human exposure issues. J Toxicol Environ Health, Part B 4:341-394, 2001). Besides being required as a co-factor for a series of enzymes or functional proteins copper displays adverse effects, e.g. accumulation in distinct tissues resulting in the formation of cirrhosis/fibrosis and hyperplasia, followed by lysosomal damage, apoptotic and necrotic cell death (see: Aston NS, Watt N, Morton IE, Tanner MS, Evans GS. Copper toxicity affects proliferation and viability of human hepatoma cells (HepG2 line). Hum Exp Toxicol 19:367-376, 2000). Copper (I) oxide (Cu₂O) is slightly more toxic with around 5-10 µM towards marine microalgae (Lim CY, Yoo YH, Sidharthan M, Ma CW, Bang IC, Kim JM, Lee KSP, Nam S, Shin HW. Effects of copper (I) oxide on growth and biochemical compositions of two marine microalgae. J Environm Biol 27:461-466, 2006). The inhibitor effect of polyP, added to the bacteria in the culture medium, is comparable with a 50% inhibitory dose of around 1 µg/ml, as shown by the inventors. Furthermore, almost no inhibitory effect is seen with bacteria that are exposed to the synthetic pyrophosphate-analogue, the bisphosphonate DMDP.

PolyP can attach to the cell membranes, and as a polyanion can complex Ca²⁺ out of the cell membrane, followed by a lysis of the cells (Tepel M, Heidenreich S, Schlüter H, Beinlich A, Nofer JR, Walter M, Assmann G, Zidek W. Diadenosine polyphosphates induce transplasma membrane calcium influx in cultured glomerular mesangial cells. Eur J Clin Invest 26:1077-1084, 1996). For some microorganisms, it has been proposed that polyP can be taken up, if complexed with bio-polymers (poly-β-hydroxybutyrate), after salvation through a pump like system (Reusch RN. Biological complexes of poly-β-hydroxybutyrate. FEMS Microbiol Rev 9:119-129, 1992).

Measuring the extent and rate of orthophosphate export in the presence of DMDP, the inventors could demonstrate that this pyrophosphate analogue drastically reduces the release of orthophosphate from the cells. This result together with the results of the growth inhibition studies of DMDP together copper shows that DMDP causes (i) an inhibition of the intracellular exopolyphosphatase-mediated hydrolysis of polyP to orthophosphate and (ii) a synergistic effect on the toxicity of copper.

The data revealed that in the presence of polyP (1 µg/ml) the biofilm formation is substantially inhibited during the 5 d incubation period, while exposure of the bacteria to polyP (1 µg/ml) and bisphosphonate DMDP (1 µg/ml) results in an (almost) complete inhibition.

While the inhibitory activity of polyP and of the bisphosphonate is synergistic with the growth reducing effect of copper, according to this invention, the influence of the antimicrobial ASABF-type antimicrobial peptide was found to be additive to the potency of copper. The mode of action of the latter peptide is different from the one of copper (Wiens M, Schröder HC, Korzhev M, Wang XH, Batel R, Müller WEG. Inducible ASABF-type antimicrobial peptide from the sponge Suberites domuncula: microbicidal and hemolytic activity in vitro and toxic effect on molluscs in vivo. Mar Drugs 9:1969-1994, 2011).

### Application of polyP in combination with exopolyphosphatase inhibitors / bisphosphonates as component of or supplement to copper-containing antifouling paints

The polyP can be present as a sodium salt or a salt with another alkali cation or as a complex with a divalent cation [polyP (Me²⁺ complex)] such as calcium [polyP (Ca²⁺ complex)]. The preparation of these complexes is state-of-the-art and has previously been described by the inventors (Müller WEG, Wang XH, Diehl-Seifert B, Kropf K, Schloßmacher U, Lieberwirth I, Glasser G, Wiens M, Schröder HC. Inorganic polymeric phosphate/polyphosphate as an inducer of alkaline phosphatase and a modulator of intracellular Ca2+ level in osteoblasts (SaOS-2 cells) in vitro. Acta Biomater 7:2661-2671, 2011; Wang XH, Schröder HC, Diehl-Seifert B, Kropf K, Schloßmacher U, Wiens M, Müller WEG. Dual effect of inorganic polymeric phosphate/polyphosphate on osteoblasts and osteoclasts in vitro. J Tissue Eng Regen Med, in press (2012). doi: 10.1002/term.1465), as well as patent application EP 11152208.2 Food supplement and injectable material for prophylaxis and therapy of osteoporosis and other bone disease. Inventors: Müller WEG, Wang X, Schröder HC.

In addition to the exopolyphosphatase inhibitor, the bisphosphonate DMDP, any other state-of-the-art exopolyphosphatase inhibitor can be used such as alendronate, risedronate, ibandronate or zoledronate which have been described as exopolyphosphatase inhibitors by the inventors already in the past (Leyhausen G, Lorenz B, Zhu H, Geurtsen W, Bohnensack R, Müller WE, Schröder HC. Inorganic polyphosphate in human osteoblast-like cells. J Bone Miner Res 13:803-812, 1998).

The polyP or its salts or complexes or combinations with an exopolyphosphatase inhibitor according to this invention can be encapsulated in an organic polymer such as shellac, alginate, or poly(lactic acid), or poly(D,L-lactide)/polyvinyl pyrrolidone-based microspheres, following state-of-the art procedures, as previously described by the inventors; e.g. EP 11152208.2 (see above).

The polyP or its salts or complexes or combinations with an exopolyphosphatase inhibitor according to this invention can be bound to or incorporated into an antifouling paint, in particular a copper-containing antifouling paint.

This invention also involves various formulations of polyP or its salts or complexes and bisphosphonates and copper for the formulation of copper-containing antifouling paints.

A further aspect of this invention concerns the combined application of polyP or its salts or complexes and bisphosphonates and copper as antifouling paint.

### Application of polyP in combination with exopolyphosphatase inhibitors / bisphosphonates as component of or supplement to copper-containing antifouling paints for prevention of macrofouling

This invention also involves the combined application of polyP or its salts or complexes and bisphosphonates and copper for prevention of macrofouling. Field experiments were performed to assess prevention of macrofouling by these combinations. PolyP in combination with an exopolyphosphatase inhibitor (dichloromethylenediphosphonic acid disodium salt; Clodronate disodium salt; DMDP) was applied together with a copper-containing antifouling paint (for example: Hempel Pacific 7609; Cuprous Oxide) or copper (for example cuprous thiocyanate) and a water-based paint resin, e.g. an acrylic copolymer (Revacryl; Harlaw Chemical Company, Ltd.) onto plates and subjected to a submerged assay. Table 1 shows the result of an experiment in which polyP, bisphosphonate and copper (cuprous thiocyanate), either alone or in combination, were mixed with the water-based paint resin and were applied to individual sample zones. In the field experiment, each combination was tested at 100 mg per sample zone. Samples without (control I; uncoated sample zone; negative control) or with the water-based paint resin only (without any additives; control II) served as control. The diameter of each sample zone was 5 cm. The experiments were performed in four replicates each. The plates were subjected to the submerged assay at a depth of 1 m at the pier nearby the Center for Marine Research of the Institute Rudjer Boskovic in Rovinj, Croatia (Northern Adriatic Sea). The exposure of the plates was carried out for 6 months. Barnacle settlement was monitored by visual inspection. At the end of the field experiment, the wet biomass of the fouling organisms of each sample zone was determined. The results revealed that the wet mass of fouling organisms of the sample zones with copper only was much lower compared to the controls (Table 1). There was, however, a strong and statistically significant increase of the efficacy of copper in prevention of macrofouling when applied together with polyP and bisphosphonate, as revealed by analysis using independent samples *t* test.

**Table 1. Prevention of macrofouling. The wet mass (g/zone) of fouling organisms per sample zone after a 6-month exposure period in the field is given. The optimal concentration ratio of polyP, bisphosphonate DMDP and copper, determined in the above-described experiments was used. The results are expressed as means (4 independent experiments each) ± SD of the mean.**

| **Sample** | **Wet biomass (g/zone)** |
|---|---|
| PolyP | 18.1 ± 2.7 |
| DMDP | 22.9 ± 4.0 |
| Copper | 10.2 ± 1.6 |
| PolyP plus DMDP plus copper | 5.7 ± 1.1 |
| Uncoated sample zone (control I) | 24.2 ± 5.3 |
| Resin only (control II) | 21.2 ± 8.1 |

### Methods

### Antimicrobial peptide from S. domuncula

The ASABF-type antimicrobial peptides, produced by the sponge *S*. *domuncula* can be prepared in a recombinant manner as described by Wiens et al. (Wiens M, Schröder HC, Korzhev M, Wang XH, Batel R, Müller WEG. Inducible ASABF-type antimicrobial peptide from the sponge Suberites domuncula: microbicidal and hemolytic activity in vitro and toxic effect on molluscs in vivo. Mar Drugs 9:1969-1994, 2011).

### S. mutans and culture condition

*S. mutans* strain ATCC 25175, obtained from DSMZ-German Resource Centre for Biological Material (Braunschweig; Germany) is cultivated on 5% defibrinated sheep blood agar as described by Santi et al. (Santi I, Grifantini R, Jiang SM, Brettoni C, Grandi G, Wessels MR, Soriani M. CsrRS regulates group B Streptococcus virulence gene expression in response to environmental pH: a new perspective on vaccine development. J Bacteriol 191:5387-5397, 2009). Incubation is performed at 37°C in an incubator (5% CO₂). As antibiotic erythromycin (10 µg/mL) is used. The growth kinetics and the inhibition studies are performed in the tryptone-vitamin based medium (Burne RA, Wen ZT, Chen YY, Penders JE. Regulation of expression of the fructan hydrolase gene of Streptococcus mutans GS-5 by induction and carbon catabolite repression. J Bacteriol 181:2863-2871, 1999) that is supplemented with 0.5% of D(+)-glucose. The growth kinetics is monitored electronically (Bioscreen C reader; Labsystems) at 600 nm (OD₆₀₀) every 60 min.

### Inhibition studies

PolyP is added as Ca²⁺ salt, complexed by addition of the Na-salt of polyP with Ca²⁺ at a stoichiometric molar ratio of 2 : 1.

### Evaluation of the combinatorial potential of copper together with the other antimicrobial agents against S. mutans growth

To assess the activity of polyP, the bisphosphonate dichloromethylenediphosphonic acid disodium salt (Clodronate disodium salt; DMDP), or the ASABF-type peptide on copper in combination experiments, dose-response experiments are performed with (*1*) copper alone (around the ED₅₀ inhibitory concentration), (*2*) with the second compound at sub-inhibitory concentrations and (*3*) in combinations [at least four concentrations each] of the of two agents. From the growth curves the ED₅₀ inhibitory concentration is assessed by logit regression. The ED₅₀ concentration is chosen to calculate the "fractional inhibitory concentration" (FIC) as described by Elion et al. (Elion GB, Singer S, Hitchings GH. Antagonists of nucleic acid derivatives. VIII. Synergism in combinations of biochemically related antimetabolites. J Biol Chem 208:477-488, 1954) and King et al. (King TC, Schlessinger D, Krogstad DJ. The assessment of antimicrobial combinations. Rev Infect Dis 3:627-633, 1981). Subsequently, the FIC values of each pair of combination are plotted. The FIC index of the antibacterial effect of copper for the three combinations is indicative for the combinatory antibacterial effect; if the FIC index (FIC_{A} + FIC_{B}) is equal to 1.0, an additive effect exists; if the FIC index is < 1, the effect is synergistic, and if the index is > 1, and antagonistic effect has to be deduced.

### Cultivation of S. mutans on microscope slides for biofilm formation

*S. mutans* was cultivated in liquid broth. After growth for overnight 300 µl aliquots are removed and placed onto a microscope slide. After allowing the cells to adhere to these surfaces (3 h) the slides are placed into petri dishes and covered with tryptone-vitamin based medium, enriched with 0.5% of D(+)-glucose. The cultures are then incubated for 5 d. The samples are carefully washed with PBS and then reacted with the lectin wheat germ agglutinin (WGA), fluorescently labeled with Alexa Fluor 555, as described by Johnsen et al. (Johnsen AR, Hausner M, Schnell A, Wuertz S. Evaluation of fluorescently labeled lectins for noninvasive localization of extracellular polymeric substances in Sphingomonas biofilms. Appl Environ Microbiol 66:3487-3491, 2000). In parallel the specimens are stained with 4',6-diamidino-2-phenylindole [DAPI]. The slides are inspected with an Olympus AHBT3 microscope under immunofluorescence light suitable for WGA, fluorescently labeled with Alexa-stained structures or for DAPI.

### Quantification of polyP

*S. mutans* cultures, grown to the stationary phase (after 25 h) are extracted after lysis of the cells with guanidinium isothiocyanate followed by binding to silicate glass, as described by Ault-Riche et al. (Ault-Riche D, Fraley CD, Tzeng CM, Kornberg A. A novel assay reveals multiple pathways regulating stress-induced accumulations of inorganic polyphosphate in Escherichia coli. J Bacteriol 180:1841-1847, 1998). Then polyP is determined by two step enzyme assay. In doing so, polyP is first converted with ATP by the polyP kinase, and then ATP is hydrolyzed by luciferase as described by Ault-Riche et al. (see above) and Alvarez and Jerez (Alvarez S, Jerez CA. Copper ions stimulate polyphosphate degradation and phosphate efflux in Acidithiobacillus ferrooxidans. Appl Environ Microbiol 70:5177-5182, 2004). Finally, the concentration of ATP is determined with a luminometer. The concentration of polyP is calculated after setting-up a standard curve for ATP. The values are correlated to the protein content in the samples, used for polyP determination.

### Phosphate efflux determinations.

*S. mutans* cells are labeled by growing them in tryptone-vitamin based medium, supplemented with 0.5% of D(+)-glucose for 25 h. After the 25 h incubation period, the cultures are centrifuged and re-suspended at a density of 10¹⁰ cells/ml in medium enriched with 0.1 mM ortho-phosphate, essentially as described by Alvarez and Jerez (see above). H₃[³²P]O₄ (≈120 Ci/ml) is added and the cultured were continued to be incubated for 12 h. Then the cells are washed, transferred to unlabeled standard medium, supplemented with 0, 10 or 30 µM DMDP, and continued to be incubated for 24 h. Aliquots are taken at the indicated periods of time, centrifuged and the radioactivity is determined in the cell-free medium using liquid scintillation spectrometry (Top-Count; Packard Instrument).

### Further methods

The results are statistically evaluated using the paired Student's t-test. For the quantification of protein the Bradford method can be used.

The results depicted in Figures 2-7 were obtained with polyPs with an average chain length of approximately 40 phosphate units (obtained from Chemische Fabrik Budenheim, Budenheim; Germany), but similar results have been obtained for polyPs with an average chain length of 100 phosphate units and larger, as well as with an average chain length of 10 phosphate units and lower.

## Claims

1. Use of inorganic polyphosphate (polyP) as an antifouling agent.

2. Use according to claim 1, wherein said antifouling agent is an antifouling paint or a component of an antifouling paint or a supplement to an antifouling paint.

3. Use according to claim 1 or 2, wherein the chain lengths of the polyP molecules are in the range 2 to 1000 phosphate units, preferably in the range 10 to 100 phosphate units, and most preferred in the range of 40 phosphate units.

4. Use according to any of claims 1 to 3, wherein the polyP is present as sodium salt or salt with another alkali cation, as a salt or complex with a divalent cation [polyP (Me²⁺ complex)] or as a calcium salt or complex [polyP (Ca²⁺ complex)].

5. Use according to any of claims 1 to 4, wherein the polyP or its salts or complexes is used in combination with an exopolyphosphatase inhibitor.

6. Use according to claim 5, wherein said exopolyphosphatase inhibitor is a bisphosphonate, such as dichloromethylene diphosphonic acid (DMDP).

7. Use according to any of claims 1 to 5, wherein said polyP or its salts or complexes, optionally with the exopolyphosphatase inhibitor is used in combination with copper.

8. An antifouling composition, comprising inorganic polyphosphate (polyP) in combination with an exopolyphosphatase inhibitor.

9. The antifouling composition according to claim 8, wherein said antifouling composition is an antifouling paint or a component of an antifouling paint or a supplement to an antifouling paint.

10. The antifouling composition according to claim 8 or 9, wherein said polyP or its salts or complexes and said exopolyphosphatase inhibitor are encapsulated in an organic polymer, such as shellac, alginate, or poly(lactic acid), or poly(D,L-lactide)/polyvinyl pyrrolidone-based microspheres.

11. The antifouling composition according to any of claims 8 to 10, further comprising copper.

12. A method for treating or preventing fouling, such as macrofouling, comprising applying an antifouling composition according to any of claims 8 to 11 on a surface to be treated.

13. The method according to claim 12, wherein said surface is exposed to an aqueous environment.

14. Use of the composition according to any of claims 8 to 11 for the prevention of fouling, such as macrofouling.
